(19) Europäisches Patentamt
European Patent Office
Office européen des brevets

(11) **EP 4 534 617 A1**

(12) **EUROPEAN PATENT APPLICATION**
published in accordance with Art. 153(4) EPC

(43) Date of publication:
**09.04.2025 Bulletin 2025/15**

(21) Application number: **23816029.5**

(22) Date of filing: **29.05.2023**

(51) International Patent Classification (IPC):
**C09D 13/00** *(2006.01)*      **B43K 19/02** *(2006.01)*

(52) Cooperative Patent Classification (CPC):
**B43K 19/02; C09D 13/00**

(86) International application number:
**PCT/JP2023/019987**

(87) International publication number:
**WO 2023/234272 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.05.2022   JP 2022087997**

(71) Applicant: **Mitsubishi Pencil Company, Limited**
**Tokyo 140-8537 (JP)**

(72) Inventor: **OKUYAMA, Hiroyuki**
**Tokyo 140-8537 (JP)**

(74) Representative: **Vossius & Partner**
**Patentanwälte Rechtsanwälte mbB**
**Siebertstrasse 3**
**81675 München (DE)**

(54)     **UNFIRED PENCIL LEAD**

(57)     A non-baked pencil lead (10) including a wax that is solid at normal temperature, a colorant, a filler, a water-soluble resin, and a cellulose fiber, wherein a ratio of a flaky substance in the filler is 20 mass% or less, and the ratio of an aggregate particle in the filler is 80 mass% or more.

FIG.1

EP 4 534 617 A1

**Description**

Technical Field

The present disclosure relates to a non-baked pencil lead.

Background Art

Hitherto, development of non-baked pencil leads such as colored pencil leads has been conducted with emphasis on matters such as improvement of color development of drawn lines and writing feel, and enhancement of strength of lead tips. Further, usually, a wax is used as a main material of a colored pencil lead in order to provide a glossy line. For example, in the case of a colored pencil that is also usable as a cosmetic, as disclosed in Japanese National-Phase Publication (JP-A) No. 2005-514463, a formulation and a production method are configured in consideration of color transfer and the like.

Further, JP-A No. S52-41028 discloses a crayon to which calcium carbonate is added as a curing agent. Moreover, JP-A No. S57-153060 discloses a solid painting tool to which calcium carbonate, talc, and barium sulfate are added as filler. Furthermore, JP-A No. 2008-45043 discloses a non-baked pencil lead containing calcium carbonate, kaolin, talc, precipitated barium sulfate, mica, and potassium titanate whiskers as filler.

SUMMARY OF INVENTION

Technical Problem

Although JP-A No. 2005-514463 discloses that the glossiness of drawn lines can be controlled by selecting the type of wax to be added to a colored pencil, no formulation for drawn lines without any glossiness is described in JP-A No. 2005-514463. A glossy drawn line has the problem that the hue of the drawn line appears to be different from the actual hue when viewed from an angle at which the drawn line looks glossy, and glossy lines are often a feature of concern when works are viewed in exhibitions. In recent years, it has been common for people to draw pictures by themselves with pencils or colored pencils, take photographs thereof with smartphone cameras or the like and post the images to SNS or the like. When photographing these drawings, the images captured by the cameras may show unintended hues owing to the glossiness of the drawn lines unless angles between light and camera are properly arranged.

Here, a graphite particle contained in a pencil lead causes glossiness of drawn lines. Moreover, in conventional colored pencils, since, in particular, talc as a filler incorporated in addition to a wax has a thin-flaky shape, the talc reflects light depending on the angle with respect to a light source, and causes a glossy appearance.

According to an embodiment of the present application, an object of the disclosure is to provide a non-baked pencil lead providing a drawn line with imperceptible glossiness even if viewed from any direction, and with a hue that does not differ from the actual hue applied.

Solution to Problem

A non-baked pencil lead according to an embodiment of the present application includes a wax that is a solid at normal temperature, a colorant, a filler, a water-soluble resin, and a cellulose fiber, in which the ratio of a flaky substance in the filler is 20 mass% or less, and the ratio of an aggregate particle in the filler is 80 mass% or more.

Herein, it is preferable for the aggregate particle to be formed of at least one of the group consisting of calcium carbonate, magnesium sulfate, aluminum hydroxide, and magnesium carbonate.

It is preferable for the filler to have a luminous reflectance of less than 0.1, which is defined as the ratio of an intensity of reflected light at 90° with respect to an intensity of incident light applied at an angle of 45° to a smooth surface formed as a mixture of a melted smack wax and the filler in a mass ratio of 1:1, which is solidified by being contacted onto a glass surface. Advantageous Effects of Invention

Since the embodiment of the present application is configured as described above, it is possible to provide a non-baked pencil lead providing a drawn line, with imperceptible glossiness even if viewed from any direction, and with a hue that does not differ from the actual hue applied.

BRIEF DESCRIPTION OF DRAWINGS

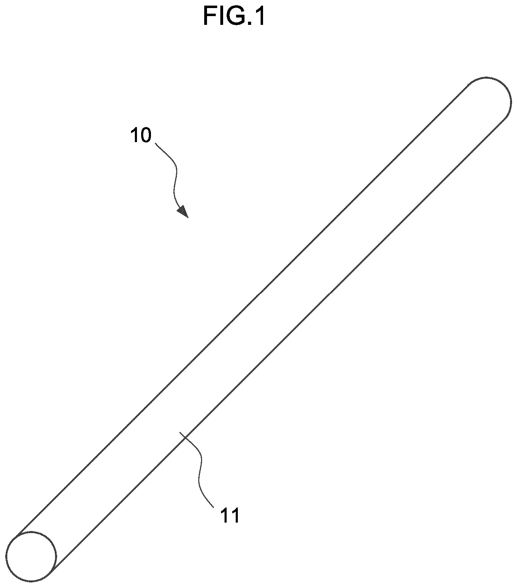

Fig. 1 illustrates a perspective view schematically showing an appearance of a non-baked pencil lead according to an embodiment.

# EP 4 534 617 A1

DESCRIPTION OF EMBODIMENTS

The non-baked pencil lead according to an embodiment of the present application includes a wax that is solid at normal temperature, a colorant, a filler, a water-soluble resin, and a cellulose fiber, wherein a ratio of a flaky substance in the filler is 20 mass% or less, and a ratio of the aggregate particle in the filler is 80 mass% or more.

Herein, the flaky substance is a flake-shaped mineral substance having an aspect ratio of 2 or more. Examples of the flaky substance include talc, kaolin, mica, and boron nitride. A thickness of the flaky substance may be, for example, less than 5 μm. That is, since a flaky substance as a filler easily reflect light, the flaky substance causes a glossy appearance of a drawn line. In the non-baked pencil lead according to the embodiment of the present application, since the ratio of the flaky substance in the filler is 20 mass% or less, and the ratio of the aggregate particle that rarely reflects light in the filler is 80 mass% or more, a glossy appearance of a drawn line is suppressed.

Herein, although it is preferable for the flaky substance not to be contained as the filler at all, the glossy appearance of a drawn line is sufficiently suppressed if the ratio of the flaky substance in the filler is 20 mass% or less. Note that, in a case in which the flaky substance is not contained as the filler, i.e., 0 mass%, it is preferable for the aggregate particle to be 100 mass% in a total amount of the filler.

Moreover, it is preferable for the aggregate particle as the filler to be formed of at least one of the group consisting of calcium carbonate, magnesium sulfate, aluminum hydroxide, and magnesium carbonate. Furthermore, the filler has a luminous reflectance of less than 0.1, which is defined as a ratio of an intensity of reflected light at 90° with respect to an intensity of incident light applied at an angle of 45° to a smooth surface formed as a mixture of a melted smack wax and the filler in a mass ratio of 1:1, which is solidified by being contacted onto a glass surface.

The wax that is a solid at normal temperature refers to, for example, a wax having a melting point of 45°C or more. For example, glyceride stearate having a melting point of 61°C, paraffin wax 135 F having a melting point of 57°C, microcrystalline wax having a melting point of 84°C, and a rosin ester having a softening point of 76°C can be used as the wax according to an embodiment of the present application. Other than the above waxes, a wax classified as a glycerin fatty acid ester and a pentaerythritol fatty acid ester, and having a melting point of 45°C or more can be used as the wax according to an embodiment of the present application.

As the colorant, a pigment or a dye commonly used as a colorant for colored pencils can be used. Examples of the pigment include graphite, titanium oxide, iron black, carbon black, Prussian blue, ultramarine blue, Blue No. 1, Bengal red, yellow iron oxide, chromium oxide, chromium hydroxide, zinc oxide, zirconium oxide, cobalt oxide, argentine, bismuth oxychloride and mica titanium, and azo organic pigments such as disazo yellow AAA and Pyrazolone Orange; cyanine organic pigments such as phthalocyanine blue and phthalocyanine green; high-grade organic pigments such as quinacridone red; dyeing pigments such as final color; and fluorescent pigments. Moreover, in addition to the pigments, dyes such as Blue No. 2, Blue No. 404, Red No. 2, Red No. 3, Red No. 102, Red No. 104, Red No. 105, Red No. 106, DPP Red, Yellow No. 4, Yellow No. 5, and Green No. 3 can be used, and these dyes can be used singly or in combination of two or more kinds thereof.

The water-soluble resin is used as a binder, and water-soluble organic polymers such as carboxymethyl cellulose sodium, carboxycellulose ammonium, polyvinyl alcohol, and methyl cellulose can be used.

The cellulose fiber is a finely crushed natural wood cellulose with a preferable average particle diameter of 100 μm or less. The cellulose fiber is included in the non-baked pencil lead of the present embodiment in order to enhance mechanical strength.

The non-baked pencil lead of an embodiment of the invention can be produced, for example, by the following production method. That is, to a mixture of a wax, a colorant, a filler, a water-soluble resin, and a cellulose fiber, the same mass of water is added. The mixture is then stirred and dispersed with a kneader, and thereafter adjusted in moisture content while kneading by a two-roll mill. The mixture prepared is pelletized and extruded into a shape of a pencil lead having a preferred thickness by a single-screw extruder. Then, the molded lead is dried to remove moisture to obtain a non-baked pencil lead 10 having a substantially cylindrical lead body 11, as illustrated in Fig. 1.

The line drawn by the non-baked pencil lead produced as described above has imperceptible glossiness even if captured in any camera angle and an ideal hue of the drawn line is finely expressed in captured images, owing to a small content of the flaky substance causing glossiness. Note that the decrease of mechanical strength of the non-baked pencil lead caused by an aggregate particle constituting most of the filler is compensated by the content of a cellulose fiber.

Examples

(1) Filler

How the luminous reflectance of the filler varies depending on the blending ratio of calcium carbonate, barium sulfate, aluminum hydroxide or magnesium carbonate as an aggregate particle as a raw material of the filler and talc as a flaky substance, was examined.

Calcium carbonate, barium sulfate, aluminum hydroxide, and magnesium carbonate having average particle sizes of 3.2 μm, 1 μm, 1.4 μm, and 5 μm, respectively, were used. The average particle diameter of talc as the flaky substance was 10 μm.

As the filler, calcium carbonate and talc were blended in accordance with the blending ratios shown in Composition 1-1 to Composition 1-7 of Table 1; barium sulfate and talc were blended in accordance with the blending ratios shown in Composition 2-1 to Composition 2-7 of Table 2; aluminum hydroxide and talc were blended in accordance with the blending ratios shown in Composition 3-1 to Composition 3-7 of Table 3; and magnesium carbonate and talc were blended in accordance with the blending ratios shown in Composition 4-1 to Composition 4-7 of Table 4.

The filler in the form of powder of each composition was mixed with the melted smack wax in a mass ratio of 1:1. Thereafter, the melted mixed wax was poured in a petri dish made of glass, cooled to solidify, and molded into pellets having a diameter of 20 mm and a thickness of 5 mm. In this manner, a measurement sample was prepared. In this measurement sample, a smooth surface thereof formed by being in contact with a glass surface was used as a measurement surface. The measurement sample was placed with the measurement surface facing upward, and the luminous reflectance, which is defined by the ratio of the intensity of reflected light at 90° with respect to the intensity of incident light applied at an angle of 45° to the measurement surface, was measured by PD-7 (Konica Minolta, Inc.). The results are also shown in Table 1 and Table 2.

[Table 1]

| Composition | Blend ratio (mass%) | | Luminous reflectance |
| --- | --- | --- | --- |
| 1-1 | 100 | 0 | 0.04 |
| 1-2 | 90 | 10 | 0.07 |
| 1-3 | 80 | 20 | 0.09 |
| 1-4 | 70 | 30 | 0.11 |
| 1-5 | 60 | 40 | 0.13 |
| 1-6 | 30 | 70 | 0.19 |
| 1-7 | 0 | 100 | 0.25 |

[Table 2]

| Composition | Blend ratio (mass%) | | Luminous reflectance |
| --- | --- | --- | --- |
| | Barium sulfate | Talc | |
| 2-1 | 100 | 0 | 0.02 |
| 2-2 | 90 | 10 | 0.06 |
| 2-3 | 80 | 20 | 0.08 |
| 2-4 | 70 | 30 | 0.10 |
| 2-5 | 60 | 40 | 0.12 |
| 2-6 | 30 | 70 | 0.18 |
| 2-7 | 0 | 100 | 0.25 |

[Table 3]

| Composition | Blend ratio (mass%) | | Luminous reflectance |
| --- | --- | --- | --- |
| | Aluminum hydroxide | Talc | |
| 3-1 | 100 | 0 | 0.04 |
| 3-2 | 90 | 10 | 0.07 |
| 3-3 | 80 | 20 | 0.09 |
| 3-4 | 70 | 30 | 0.12 |

(continued)

| Composition | Blend ratio (mass%) | | Luminous reflectance |
| --- | --- | --- | --- |
| | Aluminum hydroxide | Talc | |
| 3-5 | 60 | 40 | 0.13 |
| 3-6 | 30 | 70 | 0.17 |
| 3-7 | 0 | 100 | 0.25 |

[Table 4]

| Composition | Blend ratio (mass%) | | Luminous reflectance |
| --- | --- | --- | --- |
| | Magnesium carbonate | Talc | |
| 4-1 | 100 | 0 | 0.03 |
| 4-2 | 90 | 10 | 0.07 |
| 4-3 | 80 | 20 | 0.09 |
| 4-4 | 70 | 30 | 0.12 |
| 4-5 | 60 | 40 | 0.13 |
| 4-6 | 30 | 70 | 0.18 |
| 4-7 | 0 | 100 | 0.25 |

As shown in Table 1 and Table 2, it was found that the luminous reflectance is less than 0.1 when the blending ratio of talc is 20 mass% or less no matter which of calcium carbonate, barium sulfate, aluminum hydroxide or magnesium carbonate is used for the aggregate particle to be blended as the filler. Thereby, it was presumed that the ratio of talc as a flaky substance in the filler is properly 20 mass% or less in order to suppress the glossy appearance of a drawn line.

(2) Raw Materials

The compositions of non-baked pencil leads of Examples and Comparative Examples were as follows. Note that glyceride stearate (POEM V-200, Riken Vitamin Co., Ltd.) having a melting point of 61°C and a rosin ester having a softening point of 76°C were used as the wax. Carboxymethyl cellulose sodium (F10MC, Nippon Paper Industries Co., Ltd.) was used as the water-soluble resin. Carbon black (MA-100, Mitsubishi Chemical Group Corporation) was used as a black colorant; phthalocyanine blue (CHROMOFINE Blue HS-3, Dainichiseika Color & Chemicals Mfg. Co., Ltd.) was used as a blue colorant; permanent red (SEIKAFAST RED 4R-4016, Dainichiseika Color & Chemicals Mfg. Co., Ltd.) was used as a red colorant; phthalocyanine green (CHROMOFINE GREEN 2GO, Dainichiseika Color & Chemicals Mfg. Co., Ltd.) was used as a green colorant; and titanium dioxide (JR-701, Tayca Corporation) and lithopone (B311, ANHUI UNION TITANIUM ENTERPRISE) were used as white colorants for enhancing brightness. As the filler, any one of calcium carbonate (PC Calcium Carbonate, Shiraishi Kogyo Kaisha, Ltd.), barium sulfate (P-30,Takehara Kagaku Kogyo Co., Ltd.), aluminum hydroxide (RH-30, Iwatani Corporation), magnesium carbonate (MS-S, Konoshima Chemical Co., Ltd.), and talc (HIMICRON, Takehara Kagaku Kogyo Co., Ltd.), or a combination of two or more thereof was used. As the cellulose fiber, KC FLOCK W-50 (Nippon Paper Industries Co., Ltd.) was used. Basic magnesium sulfate (MOS-HIGE, Ube Material Industries, Ltd.) was used as an auxiliary additive.

(2-1) Example 1

The composition of Example 1 for a blue pencil lead was specified as follows: 33 mass% of glyceride stearate, 2 mass% of a rosin ester, 4 mass% of carboxymethyl cellulose sodium, 10 mass% of phthalocyanine blue and 10 mass% of titanium dioxide as colorants, 36 mass% of barium sulfate as a filler, and 5 mass% of a cellulose fiber.

(2-2) Example 2

The composition of Example 2 for a red pencil lead was specified as follows: 33 mass% of glyceride stearate, 2 mass% of a rosin ester, 4 mass% of carboxymethyl cellulose sodium, 10 mass% of permanent red and 10 mass% of titanium dioxide as colorants, 36 mass% of barium sulfate as a filler and 5 mass% of a cellulose fiber.

(2-3) Example 3

The composition of Example 3 for a green pencil lead was specified as follows: 33 mass% of glyceride stearate, 2 mass% of a rosin ester, 4 mass% of carboxymethyl cellulose sodium, 10 mass% of phthalocyanine green and 10 mass% of titanium dioxide as colorants, 36 mass% of barium sulfate as a filler and 5 mass% of a cellulose fiber.

(2-4) Example 4

The composition of Example 4 for a black pencil lead was specified as follows: 33 mass% of glyceride stearate, 2 mass% of a rosin ester, 4 mass% of carboxymethyl cellulose sodium, 15 mass% of carbon black as a colorant, 41 mass% of calcium carbonate as a filler, and 5 mass% of a cellulose fiber.

(2-5) Example 5

The composition of Example 5 for a black pencil lead was specified as follows: 33 mass% of glyceride stearate, 2 mass% of a rosin ester, 4 mass% of carboxymethyl cellulose sodium, 15 mass% of carbon black as a colorant, 36 mass% of calcium carbonate as a filler, 5 mass% of a cellulose fiber, and 5 mass% of basic magnesium sulfate.

(2-6) Example 6

The composition of Example 6 for a black pencil lead was specified as follows: 33 mass% of glyceride stearate, 2 mass% of a rosin ester, 4 mass% of carboxymethyl cellulose sodium, 15 mass% of carbon black as a colorant, 33 mass% of barium sulfate as a filler, 8 mass% of a cellulose fiber, and 5 mass% of basic magnesium sulfate.

(2-7) Example 7

The composition of Example 7 for a black pencil lead was specified as follows: 33 mass% of glyceride stearate, 2 mass% of a rosin ester, 4 mass% of carboxymethyl cellulose sodium, 15 mass% of carbon black as a colorant, 5 mass% of talc and 36 mass% of calcium carbonate as fillers, and 5 mass% of a cellulose fiber.

(2-8) Example 8

The composition of Example 8 for a blue pencil lead was specified as follows: 33 mass% of glyceride stearate, 2 mass% of a rosin ester, 4 mass% of carboxymethyl cellulose sodium, 10 mass% of phthalocyanine blue and 10 mass% of lithopone as colorants, 36 mass% of barium sulfate as a filler, and 5 mass% of a cellulose fiber.

(2-9) Example 9

The composition of Example 9 for a black pencil lead was specified as follows: 33 mass% of glyceride stearate, 2 mass% of a rosin ester, 4 mass% of carboxymethyl cellulose sodium, 15 mass% of carbon black as a colorant, 38 mass% of aluminum hydroxide as a filler, and 8 mass% of a cellulose fiber.

(2-10) Example 10

The composition of Example 10 for a black pencil lead was specified as follows: 33 mass% of glyceride stearate, 2 mass% of a rosin ester, 4 mass% of carboxymethyl cellulose sodium, 15 mass% of carbon black as a colorant, 38 mass% of magnesium carbonate as a filler, and 8 mass% of a cellulose fiber.

(2-11) Comparative Example 1

The composition of Comparative Example 1 for a black pencil lead was specified as follows: 33 mass% of glyceride stearate, 2 mass% of a rosin ester, 4 mass% of carboxymethyl cellulose sodium, 15 mass% of carbon black as a colorant, 10 mass% of talc and 31 mass% of calcium carbonate as fillers, and 5 mass% of a cellulose fiber.

(2-12) Comparative Example 2

The composition of Comparative Example 2 for a black pencil lead was specified as follows: 33 mass% of glyceride stearate, 2 mass% of a rosin ester, 4 mass% of carboxymethyl cellulose sodium, 15 mass% of carbon black as a colorant, 20 mass% of talc and 21 mass% of calcium carbonate as fillers, and 5 mass% of a cellulose fiber.

(2-13) Comparative Example 3

The composition of Comparative Example 3 for a black pencil lead was specified as follows: 33 mass% of glyceride stearate, 2 mass% of a rosin ester, 4 mass% of carboxymethyl cellulose sodium, 15 mass% of carbon black as a colorant, 41 mass% of talc as a filler, and 5 mass% of a cellulose fiber.

(2-14) Comparative Example 4

The composition of Comparative Example 4 for a black pencil lead was specified as follows: 33 mass% of glyceride stearate, 2 mass% of a rosin ester, 4 mass% of carboxymethyl cellulose sodium, 15 mass% of carbon black as a colorant, and 46 mass% of calcium carbonate as a filler.

(2-15) Comparative Example 5

The composition of Comparative Example 5 for a blue pencil lead was specified as follows: 33 mass% of glyceride stearate, 2 mass% of a rosin ester, 4 mass% of carboxymethyl cellulose sodium, 10 mass% of phthalocyanine blue and 10 mass% of titanium dioxide as colorants, and 41 mass% of talc as a filler.

(2-16) Comparative Example 6

The composition of Comparative Example 6 for a red pencil lead was specified as follows: 33 mass% of glyceride stearate, 2 mass% of a rosin ester, 4 mass% of carboxymethyl cellulose sodium, 10 mass% of permanent red and 10 mass% of titanium dioxide as colorants, and 41 mass% of talc as a filler.

(2-17) Comparative Example 7

The composition of Comparative Example 7 for a green pencil lead was specified as follows: 33 mass% of glyceride stearate, 2 mass% of a rosin ester, 4 mass% of carboxymethyl cellulose sodium, 10 mass% of phthalocyanine green and 10 mass% of titanium dioxide as colorants, and 41 mass% of talc as a filler.

(3) Production of Non-baked Pencil Lead

To each of the raw materials of Example 1 to Example 10 and Comparative Example 1 to Comparative Example 7, the same mass of water was added. The mixture was stirred with a kneader, and thereafter adjusted in moisture content while kneading by a two-roll mill. This mixture was pelletized and formed into a thin stripe by a single screw extruder, and thereafter dried at 45°C for 24 hours to remove moisture in Example 1 to Example 3 and Example 8 and Comparative Example 5 to Comparative Example 7, and dried at 50°C for 24 hours to remove moisture in Example 4 to Example 7, Example 9 and Example 10 and Comparative Example 1 to Comparative Example 4. As a result, a blue non-baked pencil lead having a diameter of 2.5 mm was obtained (Example 1, Example 8 and Comparative Example 5), a red non-baked pencil lead was obtained (Example 2 and Comparative Example 6), a green non-baked pencil lead was obtained (Example 3 and Comparative Example 7), and a black non-baked pencil lead was obtained (Example 4 to Example 7, Example 9 and Example 10, and Comparative Example 1 to Comparative Example 4).

(4) Drawn Line

A hand-written line was prepared in accordance with the sample preparation method specified in 8.9a) of JIS S 6006: 2020. Specifically, a drawing paper sheet (basis weight: from 78.3 to 205 g/m$^2$, whiteness degree: 75% or more) was spread on a flat glass plate. A non-baked pencil lead was moved back and forth by hand in the horizontal direction and the vertical direction so as to uniformly fill the sheet surface. In this manner, measurement samples were prepared.
The machine-written line was prepared in accordance with Method A defined in 8.7.2 of JIS S 6006: 2020. Specifically, a spiral line was drawn like a record groove on the drawing paper by a record-groove drawing machine equipped with a non-baked pencil lead under the following writing conditions. In this manner, measurement samples were prepared.

Printing paper: Kent paper having a basis weight of 128 $\pm$ 5 g/m$^2$
Writing load: 3 N

Writing speed: 3.0 m/min
Width of pitch between lines: 0.5 mm
Distance of line: 6 ± 1 m
Writing angle: 75°
Tip shape of lead: truncated cone shape with taper angle of 17 ± 1° and tip diameter of 0.6 ± 0.1 mm
Rotation of lead: once per circle of a drawn line

(5) Brightness Measurement

Brightness was measured as follows. The hand-written and machine-written lines by each of the pencils of Examples and Comparative Examples were subjected to measurement by a color meter (SC-P, Suga Test Instruments Co., Ltd.).

(6) Gloss Measurement

Gloss was measured as follows. The gloss of the hand-written and machine-written lines of each of Examples and Comparative Examples at 60° and 85° was measured by a digital glossmeter UGV-5 (manufactured by Suga Test Instruments Co., Ltd.).

(7) Measurement of Bending Strength

Ten non-baked pencil leads for each of Examples and Comparative Examples were subjected to a bending strength test defined in 8.6 of JIS S 6006: 2020, and an average value thereof was obtained. More specifically, using a Tensilon universal material tester (RTC-1150A, ORIENTEC CO., LTD.), a load was applied at a rate of 10 mm/minute to the center portion of the non-baked pencil lead supported by supporting points arranged at a distance of 60 mm. The load (F, unit: N) applied when the non-baked pencil lead was broken was measured. The bending strength (σ, unit: MPa) was calculated in accordance with the following Formula (1). The tip of a tool applying a load and the tips of both supporting points had arc shapes, and the radii (R) of the tips satisfied R = 0.2 ± 0.02 (mm).

$$\sigma = 8\,Fl/\pi d^3 \qquad \text{Formula (1)}$$

Note that symbol "1" in Formula (1) represents the distance (mm) between the supporting points, and is 60 mm herein. Moreover, in Formula (1), symbol "d" is the diameter (mm) of the non-baked pencil lead, and is 2.5 mm herein. The bending strength was measured immediately after production.

(8) Measurement Results

The measurement results of the brightness, gloss and bending strength of Examples and Comparative Examples are shown in Table 5.

[Table 5]

| Example/Comparative Example | Hand-written line | | | Machine-written line | | | Bending strength (MPa) |
| --- | --- | --- | --- | --- | --- | --- | --- |
| | Brightness (L*) | Gloss | | Brightness (L*) | Gloss | | |
| | | 60° | 85° | | 60° | 85° | |
| Example 1 | 34.9 | 1.3 | 4.0 | 39.8 | 1.0 | 2.7 | 24.0 |
| Example 2 | 42.2 | 2.0 | 3.2 | 45.3 | 1.5 | 3.6 | 25.0 |
| Example 3 | 50.1 | 1.4 | 3.6 | 52.4 | 1.2 | 4.0 | 24.5 |
| Example 4 | 20.4 | 0.5 | 3.4 | 26.4 | 2.6 | 5.4 | 24.0 |
| Example 5 | 22.0 | 2.0 | 5.0 | 31.0 | 4.0 | 8.7 | 26.5 |
| Example 6 | 23.0 | 2.0 | 4.0 | 30.0 | 3.0 | 6.0 | 20.3 |
| Example 7 | 21.2 | 0.5 | 1.3 | 29.8 | 3.9 | 8.2 | 25.0 |
| Example 8 | 33.0 | 1.5 | 4.5 | 38.0 | 1.2 | 3.0 | 23.2 |

(continued)

| Example/Comparative Example | Hand-written line | | | Machine-written line | | | Bending strength (MPa) |
|---|---|---|---|---|---|---|---|
| | Brightness (L*) | Gloss | | Brightness (L*) | Gloss | | |
| | | 60° | 85° | | 60° | 85° | |
| Example 9 | 22.5 | 1.1 | 4.0 | 28.0 | 3.0 | 5.6 | 25.8 |
| Example 10 | 22.8 | 1.2 | 4.2 | 28.4 | 3.2 | 5.8 | 26.3 |
| Comparative Example 1 | 22.7 | 1.2 | 2.5 | 30.2 | 5.4 | 14.7 | 25.5 |
| Comparative Example 2 | 24.5 | 1.2 | 15.5 | 30.7 | 9.7 | 22.5 | 26.6 |
| Comparative Example 3 | 27.5 | 8.2 | 35.2 | 33.5 | 13.1 | 35.0 | 28.0 |
| Comparative Example 4 | 19.8 | 0.4 | 2.0 | 25.8 | 2.4 | 5.0 | 14.0 |
| Comparative Example 5 | 47.6 | 3.2 | 21.7 | 46.6 | 4.4 | 11.8 | 24.0 |
| Comparative Example 6 | 49.9 | 7.3 | 52.7 | 49.0 | 4.6 | 7.5 | 25.0 |
| Comparative Example 7 | 42.2 | 2.3 | 15.3 | 39.3 | 8.3 | 31.2 | 24.5 |

First, Example 1, Example 8 and Comparative Example 5; Example 2 and Comparative Example 6; and Example 3 and Comparative Example 7 having the same hue were compared. The ratio of barium sulfate as an aggregate particle in the filler was 100 mass% in all of the Examples, whereas the ratio of talc as the flaky substance in the filler was 100 mass% in all of the Comparative Examples. Then, the values of gloss of the hand-written lines at 85° were beyond 10 in any one of the Comparative Examples, and the values of gloss of the machine-written lines at 85° were beyond 10 in Comparative Example 5 and Comparative Example 7. On the other hand, in all of the Examples, the gloss values measured under any conditions were below 10. A distinctive difference was not found in brightness between Examples and Comparative Examples. From the above, it was found that gloss was suppressed without affecting the brightness by replacing a flaky substance in the filler with an aggregate particle in the colored non-baked pencil leads.

Note that, in the compositions of Example 1 and Example 8 for the same blue color leads, different white pigments, i.e., titanium dioxide and lithopone, were used, respectively. However, no significant difference was found in any one of the measurement results. Therefore, it was presumed that lithopone can be used as a white pigment in place of titanium dioxide.

Next, the black non-baked pencil leads of Example 4 to Example 7, Example 9 and Example 10, and Comparative Example 1 to Comparative Example 3 were studied. The ratio of an aggregate particle as calcium carbonate, barium sulfate, aluminum hydroxide, or magnesium carbonate in the filler was 80 mass% or more in all of the Examples, whereas the ratio of talc as a flaky substance in the filler was 20 mass% or more in all of the Comparative Examples. That is, the ratio of talc in the filler was 0 mass% in Examples 4 to 6, 9, and 10, whereas the ratio thereof was 12.2 mass% (5 mass% of talc, 36 mass% of calcium carbonate) in Example 7. In contrast, the ratio of talc was 24.4 mass% (talc: 10 mass%, calcium carbonate: 31 mass%) in Comparative Example 1, 48.8 mass% (talc: 20 mass%, calcium carbonate: 21 mass%) in Comparative Example 2, and 100 mass% in Comparative Example 3.

Then, in all of Comparative Example 1 to Comparative Example 3, the value of gloss of the machine-written line at 85° was beyond 10. The value of gloss of the hand-written line at 85° was also beyond 10 in Comparative Example 2 and Comparative Example 3, and furthermore, the value even at 60° was beyond 10 in Comparative Example 3. In contrast, in all of Example 4 to Example 7, Example 9, and Example 10, the gloss values measured under any conditions were below 10. Note that a distinctive difference was not found in brightness between Examples and Comparative Examples. From the above, it was also found that the gloss of the non-baked pencil leads as black pencil leads was suppressed without affecting the brightness by replacing a flaky substance in the filler with an aggregate particle.

Note that, although, in Comparative Example 4, the ratio of calcium carbonate in the filler was 100 mass%, the flexural strength was significantly low owing to the absence of the cellulose fiber. Thereby, it was found that the mechanical strength of the non-baked pencil lead provided by talc as a filler is compensated by the cellulose fiber.

INDUSTRIAL APPLICABILITY

The present disclosure can be used as a non-baked pencil lead.

**Claims**

1. A non-baked pencil lead comprising a wax that is solid at normal temperature, a colorant, a filler, a water-soluble resin, and a cellulose fiber,
wherein a ratio of a flaky substance in the filler is 20 mass% or less, and a ratio of an aggregate particle in the filler is 80 mass% or more.

2. The non-baked pencil lead according to claim 1, wherein the aggregate particle is formed of at least one of the group consisting of calcium carbonate, magnesium sulfate, aluminum hydroxide, and magnesium carbonate.

3. The non-baked pencil lead according to claim 1 or claim 2, wherein the filler has a luminous reflectance of less than 0.1, which is defined as a ratio of an intensity of reflected light at 90° with respect to an intensity of incident light applied at an angle of 45° to a smooth surface formed as a mixture of a melted smack wax and the filler in a mass ratio of 1:1, which is solidified by being contacted onto a glass surface.

FIG.1

## INTERNATIONAL SEARCH REPORT

International application No.

**PCT/JP2023/019987**

### A. CLASSIFICATION OF SUBJECT MATTER

***C09D 13/00***(2006.01)i; ***B43K 19/02***(2006.01)i
FI:   C09D13/00; B43K19/02 K

According to International Patent Classification (IPC) or to both national classification and IPC

### B. FIELDS SEARCHED

Minimum documentation searched (classification system followed by classification symbols)

C09D13/00; B43K19/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-189720 A (PILOT CORP.) 31 October 2019 (2019-10-31)<br>   paragraphs [0020], [0101], examples 1-16 | 1-3 |
| A | JP 2012-52109 A (MITSUBISHI PENCIL CO., LTD.) 15 March 2012 (2012-03-15)<br>   example 5 | 1-3 |
| A | JP 2020-2191 A (MITSUBISHI PENCIL CO., LTD.) 09 January 2020 (2020-01-09)<br>   examples | 1-3 |
| A | JP 2004-262984 A (PENTEL CORP.) 24 September 2004 (2004-09-24)<br>   paragraph [0005] | 1-3 |

☐ Further documents are listed in the continuation of Box C.     ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **03 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/019987**

| Patent document cited in search report | | | Publication date (day/month/year) | Patent family member(s) | | | Publication date (day/month/year) |
|---|---|---|---|---|---|---|---|
| JP | 2019-189720 | A | 31 October 2019 | (Family: none) | | | |
| JP | 2012-52109 | A | 15 March 2012 | US example 5 | 2013/0177345 | A1 | |
| | | | | WO | 2012/018107 | A1 | |
| | | | | EP | 2602292 | A1 | |
| | | | | CN | 103154161 | A | |
| JP | 2020-2191 | A | 09 January 2020 | US examples | 2021/0371690 | A1 | |
| | | | | WO | 2020/004390 | A1 | |
| | | | | EP | 3812431 | A1 | |
| | | | | CN | 112313295 | A | |
| JP | 2004-262984 | A | 24 September 2004 | (Family: none) | | | |

Form PCT/ISA/210 (patent family annex) (January 2015)

**EP 4 534 617 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005514463 A
- JP S5241028 A
- JP S57153060 A
- JP 2008045043 A